Europäisches Patentamt

(19) European Patent Office

Office européen des brevets

(11) Publication number : **0 562 898 A2**

(12) **EUROPEAN PATENT APPLICATION**

(21) Application number : **93400618.0**

(22) Date of filing : **11.03.93**

(51) Int. Cl.⁵ : **A01N 3/02**

(30) Priority : **17.03.92 JP 92000/92**
**22.12.92 JP 357114/92**

(43) Date of publication of application :
**29.09.93 Bulletin 93/39**

(84) Designated Contracting States :
**CH DE FR GB IT LI NL**

(71) Applicant : **TAKEDA GARDEN PRODUCTS CO.,**
**LTD.**
**1-7, Nihonbashi-Honmachi 2-chome, Chuo-ku**
**Tokyo (JP)**

(72) Inventor : **Tanaka, Fukuju**
**2-48, 2-bancho, Uegahara**
**Nishinomiya-shi, Hyogo (JP)**

(74) Representative : **Bonnetat, Christian**
**CABINET BONNETAT 23, Rue de**
**St.Pétersbourg**
**F-75008 Paris (FR)**

(54) **Agent for retaining vitality of cut flower and method for retaining the same.**

㊿ An agent for retaining vitality of a cut flower contains at least one selected from an ingredient group comprising (1) an inorganic acid or its salt, (2) an organic acid having a carbon number of 2 to 4 or its salt, (3) a gallic acid, (4) nicotinamide and (5) L-aruginine. A cut portion of the cut flower is treated by a solution of the agent for retaining vitality of the cut flower.

EP 0 562 898 A2

## BACKGROUND OF THE INVENTION

The present invention relates to an agent for retaining vitality of a cut flower, which agent serves to maintain vitality or freshness of the cut flower for a long time by restraining the cut flower from withering and a method for retaining vitality of a cut flower by use of the vitality retaining agent.

## DESCRIPTION OF THE PRIOR ART

It is already known in the art that a cut flower such as a carnation, a babies'-breath and a lily is apt to be withered by an extremely small quantity of ethylene gas while such an effect of the ethylene gas can be restrained by immersing the cut flower into a solution of silver thiosulfate, namely a STS liquid preparation for a certain time. Nowadays, such preparations are widely on the markets in the Netherland and Japan, so that they are used as so-called a pretreatment agent for cut flowers of a carnation and the like before shipment [ refer to "Acta Horticulturae" 91, 99 ~ 108 by H. Veen, (1979)].

By the way, though it is also known in the art that an α-amino-isobutyric acid, an aminooxyacetic acid and the like may be used as an anti-ethylene agent which doesn't contain silver at all differently from the STS preparation which is a compound of silver, they havent been put into practice yet [ refer to the annual report (1991) from Vegetables Tea Experiment Station of Ministry of Agriculture & Forestry by Onozaki and Yamaguchi, and "Agriculture and Gardening" Vol. 67 No. 1 (1992) by Funakoshi].

## PROBLEMS PRESENTED BY THE PRIOR ART

The STS preparation is effective as a vitalizing agent for a cut flower. There are, however, several problems associated with the STS preparation. That is, since the STS preparation contains a heavy metal, so-called silver, as its principal ingredient, it is apprehended that a life-environment is polluted by the preparation and it is not easy to dispose its waste liquid after use.

Therefore, has been required such an anti-ethylene agent as to contain no silver at all. Both the α-amino-isobutyric acid and the aminooxyacetic acid seem to be not at all inferior in vitality retaining effect in comparison with the STS preparation. But, since they are too expensive in comparison with the STS preparation to be put into practice, still the STS preparation is used as most of the anti-ethylene agent.

## SUMMARY OF THE INVENTION

It is an object of the present invention to provide an agent for retaining vitality of a cut flower which agent doesn't contain such a heavy metal or a powerful poisonous substance as to be contained in a STS preparation, can be readily available industrially and has a superior capability of retaining vitality of a cut flower or retaining freshness thereof so as to be used also as a pretreatment agent before shipment of cut flowers and a method for retaining vitality of a cut flower.

For accomplishing the above-mentioned object, the inventors of the present invention experimented an enormous number of inorganic compounds and organic compounds in a practical concentration range as the pretreatment agent for a cut flower of a carnation and so on. At least 80 % of those compounds were ineffective or almost ineffective. Most of the compounds were found to have only a very small effect and thus could not be expected to be put into practice. But, it was found that about 20 kinds of compounds had remarkable effects while especially ten and several kinds of them were very inexpensive in comparison with the STS preparation and profitable in practice. Provided that they have bad smell or are irritative to a skin in spite of being effective for vitalizing, they cant be put into practice. Absolutely, a powerful poisonous substance must be avoided. The inventors have found that (1) an inorganic acid or its salt, (2) an organic acid having a carbon number of 2 to 4 or its salt, (3) a gallic acid, (4) nicotinamide or (5) L-aruginine has a remarkably superior capability of retaining vitality or freshness of a cut flower for pretreating the cut flower before shipment.

A first invention of the present application is to provide at least one kind of the above-mentioned (1) to (5) compounds.

As a preferable example of such inorganic acids or their salts, may be mentioned a phosphoric acid, an urea phosphoric acid, ammonium phosphate, alkali metal salts of phosphoric acids ( sodium phosphate, potassium phosphate ), alkali metal salts of perboric acids ( sodium perborate, potassium perborate ), aluminium potassium sulfate ( potassium phosphate, aluminium ), aluminium sulfate, aluminium nitrate and so on and additionally may be mentioned a boric acid, alkali metal salts of boric acids ( sodium borate, potassium borate ) and ammonium borate.

As organic acids having a carbon number of 2 to 4, it is preferable to employ a carboxylic acid having a

2

carbon number of 2 to 4 which may have hydroxyl and may be mentioned, for instance a glycolic acid, an acetic acid, an acrylic acid, a malonic acid, a lactic acid, a fumaric acid, a maleic acid, a succinic acid, a malic acid, a tartaric acid and so on. As their salts may be mentioned their alkali metal salts.

When a phosphoric acid, ammonium phosphate, a boric acid, or a salt of a boric acid is added to the above-mentioned inorganic or organic compounds suitably, its effect is further enhanced.

Incidentally, a strong acidic liquid or a strong alkaline liquid is not suitable practically while a weak acidic liquid, a neutral liquid or a weak alkaline liquid capable of preventing a skin chapping in handling is preferable.

An agent for retaining vitality of a cut flower containing such substances should be used for, for instance various kinds of carnations and also for those having various colors, and further it should be used for various kinds of other cut flowers beside the carnations. Herein, it should be noted that even such vitality retaining agents as to have the same ingredients affect differently, for instance a white carnation and a red carnation with respect to the prolongation of life. Therefore, in order to produce a most suitable preparation for each kind of cut flower, it becomes necessary to take various effective recipes depending on the object cut flower.

From this point of view, such an ingredient as to be composed of the above-mentioned compounds, especially alkali metal salts of boric acids, ammonium borate or aluminium sulfate to which a boric acid is added may be used preferably as an effective ingredient of an agent for retaining vitality of a cut flower according to the present invention.

The vitality retaining agent of the present invention may contain other ingredients optionally beside at least one effective ingredient of the above-mentioned (1) through (5) compounds. As such ingredients may be mentioned succharides such as grape sugar, cane sugar, fruit sugar, sorbitol and so on. One kind or at least two kinds of sugars of these succharides may be contained therein in combination. Such succharides serve to hasten a bud blooming and to enlarge a flower without weakening vitality retaining effects of the above-mentioned effective ingredients.

Further, it may contains antiseptics such as SLAOFF 620 ( available from TAKEDA CHEMICAL INDUSTRIES, Ltd. ). Further, optionally it may contain such an ingredient as to be compounded with other usual agents for retaining vitality of a cut flower, for instance various kinds of vitamins, pigments, perfumes and so on.

Though a compounding ratio for those succharides and antiseptics can not be determined unconditionally because it differs depending on the kind of ingredient, about 25 to 55 percent by weight, preferably 45 percent by weight of succharides and about 0.8 to 3.5 percent by weight, preferably 1.7 percent by weight of antiseptics may be compounded relative to the whole of the vitality retaining agent of the present invention.

Finally, the vitality retaining agent of the present invention composed of the above-mentioned effective ingredients and other ingredients is to be diluted with water into the concentration range of 1/50 to 1/100 so as to reach a suitable use concentration, so that it can be used as a pretreatment agent or a posttreatment agent for cut flowers.

Though the use concentrations of the above-mentioned effective compounds under diluted conditions differ depending on an immersion time of a cut flower and vary depending on the kinds of compounds, they may be set in the range of about 1 to 100 millimol, preferably 5 to 60 millimol in the case of the immersion time of 2 to 5 hours. Especially, in the case of deca-hydrate of sodium borate and octa-hydrate of ammonium borate, it is most preferable to set their concentrations to about 10 millimol.

Incidentally, the concentrations of compounds in the case of the immersion time of 12 to 18 hours may be set lower than those in the case of a short time immersion. But, it is not limited to above-mentioned ranges because there are also other conditions such as a room temperature, a kind of a cut flower, a dry state of a cut flower and so on.

Further, the inventors intend to propose also a method for retaining vitality of a cut flower.

That is, a second invention resides in a method for retaining vitality of a cut flower which method comprising a step for treating a cut portion of a cut flower by a solution containing at least one kind of ingredient selected from (1) an inorganic acid or its salt, (2) an organic acid having a carbon number of 2 to 4 or its salt, (3) a gallic acid, (4) nicotinamide or (5) L-aruginine.

The treatment is carried out by immersing a cut flower having a stalk cut to a suitable length, for instance usually about 45 cm to 50 cm below its flower into the above-mentioned solution and leaving it therein for a suitable time.

When a cut flower of a carnation is immersed into the solution containing the above-mentioned inorganic or organic compounds for several hours, a life prolonging effect for the cut flower can be enhanced remarkably.

According to the present invention, since an effect of retaining vitality of a cut flower is superior and no heavy metals and powerful poisonous substances are contained in the vitalizing agent, no environmental problems come out as well as such beautiful cut flowers as to be in good preservation can be presented.

Especially, when an alkali metal salt of a boric acid or ammonium borate is used as an effective ingredient of the agent, or when aluminium sulfate to which a boric acid is added is used, the agent can be readily handled without causing a hand or skin chapping. Further, even when the agent is used for various kinds of cut flowers, vitality or freshness of each cut flower can be retained for a long time regardless of their kinds.

## DETAILED DESCRIPTION OF PREFERRED EMBODIMENTS

### Embodiment 1

Ten carnations having stalks cut in a length of 45 cm below flowers were put in the solution ( chemical liquid ) composed of 2.4 g of an urea phosphoric acid dissolved in 500 ml of city water and immersed therein at a room temperature of about 20 °C for 5 hours. After that, the cut flowers were moved to the solution composed of 500 ml of city water and 0.1 to 0.3 percent of an antiseptic available from TAKEDA CHEMICAL INDUSTRIES, Ltd. under the trade name of "SLAOFF 620" as fungicidal composition dissolved therein and left at a substantially constant room temperature of 27 to 31 °C. Besides, other ten cut flowers which had not been previously immersed in the chemical liquid were put in a solution composed of 500 ml of city water and the aforementioned antiseptic added thereto and left at the same constant room temperature.

The cut flowers which have not been immersed in the chemical liquid previously suffer discoloration of flower as well as wither up within about seven days. The cut flowers which have been immersed in the chemical liquid preserve beautiful flowers even after eleven days and maintain the beauties for about fourteen days.

### Embodiment 2

Similarly to Embodiment 1, the cut flowers of carnations were immersed in the solution obtained by dissolving 2.0 g of a phosphoric acid in 500 ml of city water and treated in the same way.

### Embodiment 3

Similarly to Embodiment 1, the cut flowers of carnations were immersed in the solution obtained by dissolving 1.7 g of ammonium phosphate in 500 ml of city water and treated in the same way.

### Embodiment 4

Similarly to Embodiment 1, the cut flowers of carnations were immersed in the solution obtained by dissolving 1.6 g of potassium dihydrogen-phosphate in 500 ml of city water and treated in the same way.

### Embodiment 5

Similarly to Embodiment 1, the cut flowers of carnations were immersed in the solution obtained by dissolving 0.9 g of a phosphorous acid in the 500 ml of city water and treated in the same way.

### Embodiment 6

Similarly to Embodiment 1, the cut flowers of carnations were immersed in the solution obtained by dissolving 1.0 g of sodium perborate in 500 ml of city water and treated in the same way.

### Embodiment 7

Similarly to Embodiment 1, the cut flowers of carnations were immersed in the solution obtained by dissolving 1.2 g of a glycolic acid in 500 ml of city water and treated in the same way.

### Embodiment 8

Similarly to Embodiment 1, the cut flowers of carnations were immersed in the solution obtained by dissolving 1.4 g of an acetic acid in 500 ml of city water and treated in the same way.

### Embodiment 9

Similarly to Embodiment 1, the cut flowers of carnations were immersed in the solution obtained by dissolving 1.1 g of an acrylic acid in 500 ml of city water and treated in the same way.

Embodiment 10

Similarly to Embodiment 1, the cut flowers of carnations were immersed in the solution obtained by dissolving 1.4 g of a malonic acid in 500 ml of city water and treated in the same way.

Embodiment 11

Similarly to Embodiment 1, the cut flowers of carnations were immersed in the solution obtained by dissolving 1.4 g of a DL-lactic acid in 500 ml of city water and treated in the same way.

Embodiment 12

Similarly to Embodiment 1, the cut flowers of carnations were immersed in the solution obtained by dissolving 1.4 g of a fumaric acid in 500 ml of city water and treated in the same way.

Embodiment 13

Similarly to Embodiment 1, the cut flowers of carnations were immersed in the solution obtained by dissolving 1.4 g of a maleic acid in 500 ml of city water and treated in the same way.

Embodiment 14

Similarly to Embodiment 1, the cut flowers of carnations were immersed in the solution obtained by dissolving 2.3 g of a DL-tartaric acid in 500 ml of city water and treated in the same way.

Embodiment 15

Similarly to Embodiment 1, the cut flowers of carnations were immersed in the solution obtained by dissolving 2.0 g of a DL-malic acid in 500 ml of city water and treated in the same way.

Embodiment 16

Similarly to Embodiment 1, the cut flowers of carnations were immersed in the solution obtained by dissolving 1.6 g of a succinic acid in 500 ml of city water and treated in the same way.

Embodiment 17

Similarly to Embodiment 1, the cut flowers of carnations were immersed in the solution obtained by dissolving 1.7 g of a gallic acid in 500 ml of city water and treated in the same way.

Embodiment 18

Similarly to Embodiment 1, the cut flowers of carnations were immersed in the solution obtained by dissolving 1.8 g of nicotinamide in 500 ml of city water and treated in the same way.

Embodiment 19

Similarly to Embodiment 1, the cut flowers of carnations were immersed in the solution obtained by dissolving 1.7 g of L-aruginine in 500 ml of city water and treated similarly.

Embodiment 20

Similarly to Embodiment 1, the cut flowers of carnations were immersed in the solution obtained by dissolving 2.8 g of 14-hydrate of aluminium sulfate in 500 ml of city water and treated in the same way.

Embodiment 21

Similarly to Embodiment 1, the cut flowers of carnations were immersed in the solution obtained by dissolving 7.1 g of dodeca-hydrate of potassium aluminium sulfate in 500 ml of city water and treated in the same way.

Embodiment 22

Similarly to Embodiment 1, the cut flowers of carnations were immersed in the solution obtained by dissolving 5.6 g of nona-hydrate of aluminium nitrate in 500 ml of city water and treated in the same way.

Embodiment 23

Similarly to Embodiment 1, the cut flowers of carnations were immersed in the solution obtained by dissolving 0.6 g of a boric acid in 500 ml of city water and treated similarly.

Embodiment 24

Similarly to Embodiment 1, the cut flowers of carnations were immersed in the solution obtained by dissolving 1.9 g of deca-hydrate of sodium borate in 500 ml of city water and treated in the same way.

Embodiment 25

Similarly to Embodiment 1, the cut flowers of carnations were immersed in the solution obtained by dissolving 4.0 g of octa-hydrate of ammonium borate in 500 ml of city water and treated in the same way.

Embodiment 26

Similarly to Embodiment 1, the cut flowers of carnations were immersed in the solution obtained by dissolving 0.3 g of a boric acid and 1.5 g of quadri-hydrate of potassium borate in 500 ml of city water and treated in the same way.

Embodiment 27

Similarly to Embodiment 1, the cut flowers of carnations were immersed in the solution obtained by adding 0.6 g of a boric acid to 2.8 g of 14-hydrate of aluminium sulfate and dissolving them in 500 ml of city water and treated in the same way.

Embodiment 28

Similarly to Embodiment 1, the cut flowers of carnations were immersed in the solution obtained by adding 0.6 g of a boric acid to 0.5 g of a malonic acid and dissolving them in 500 ml of city water and treated in the same way.

Embodiment 29

Similarly to Embodiment 1, the cut flowers of carnations were immersed in the solution obtained by adding 3.8 g of deca-hydrate of sodium borate to 0.5 g of a phosphoric acid and dissolving them in 500 ml of city water and treated in the same way.

Embodiment 30

Similarly to Embodiment 1, the cut flowers of carnations were immersed in the solution obtained by adding 3.8 g of deca-hydrate of sodium borate to 1.4 g of di-sodium phosphate and dissolving them in 500 ml of city water and treated in the same way.

Embodiment 31

Similarly to Embodiment 1 , the cut flowers of carnations were immersed in the solution obtained by adding 0.6 g of boric acid to 1.3 g of di-hydrate of calcium chloride and dissolving them in 500 ml of city water and treated in the same way.

Embodiment 32

Similarly to Embodiment 1, the cut flowers of carnations were immersed in the solution obtained by adding 0.6 g of boric acid to 0.5 g of potassium acetate and dissolving them in 500 ml of city water and treated in the same way.

Embodiment 33

Similarly to Embodiment 1, the cut flowers of carnations were immersed in the solution obtained by adding 0.6 g of a boric acid to 0.6 g of nicotinamide and dissolving them in 500 ml of city water and treated in the same way.

Embodiment 34

Similarly to Embodiment 1, the cut flowers of carnations were immersed in the solution obtained by adding 0.6 g of a boric acid to 1.0 g of L-aruginine and dissolving them in 500 ml of city water and treated in the same way.

Embodiment 35

Similarly to Embodiment 1, the cut flowers of carnations were immersed in the solution obtained by adding 0.6 g of a boric acid to 1.1 g of quadri-hydrate of magnesium acetate and dissolving them in 500 ml of city water and treated in the same way.

Embodiment 36

Similarly to Embodiment 1, the cut flowers of carnations were immersed in the solution obtained by adding 0.6 g of a boric acid to 0.9 g of mono-hydrate of a gallic acid and dissolving them in 500 ml of city water and treated in the same way.

Embodiment 37

Similarly to Embodiment 1, the cut flowers of carnations were immersed in the solution obtained by adding 0.9 g of deca-hydrate of sodium borate to 1.9 g of dodeca-hydrate of tri-sodium phosphate and dissolving them in 500 ml of city water and treated in the same way.

Embodiment 38

Similarly to Embodiment 1, the cut flowers of carnations were immersed in the solution obtained by adding 0.6 g of a boric acid to 0.8 g of mono-hydrate of calsium acetate and dissolving them in 500 ml of city water and treated in the same way.

According to the treatments of the above-mentioned Embodiments 2 to 38, a superior vitality retaining effect could be obtained similarly to Embodiment 1.

Embodiment 39

An effect of the agent were observed for different kinds of cut flowers in the case of using as a pretreatment agent solutions of 10 to 15 millimol of sodium borate or of ammonium borate and in the case of using as a pretreatment agent a solution of aluminium sulfate to which a boric acid has been added, respectively.

That is, test liquids of those compounds were prepared while a liquid equivalent to the STS preparation containing silver was prepared for comparison, and both cut flowers of five white and five red carnations were immersed in each of test liquids at a room temperature of 21 °C for 5 hours. Then, each cut flower was taken out and moved to 350 ml of city water and left at a substantially constant temperature of 27 to 29 °C, so that changes of the cut flowers were observed.

The test liquids employed in this test were as follows.

Test liquid 1: 1.33 g of deca-hydrate of sodium borate was dissolved in 350 ml of city water.

Test liquid 2: 1.90 g of octa-hydrate of ammonium borate was dissolved in 350 ml of city water.

Test liquid 3: 0.5 g of grape sugar was added to 1.33 g of deca-hydrate of sodium borate and then they were dissolved in 350 ml of city water.

Test liquid 4: 0.44 g of a boric acid was added to 14-hydrate of aluminium sulfate and then they were dissolved in 350 ml of city water.

Comparative STS liquid: The STS preparation containing 0.23 percent of silver was diluted with city water to the concentration of 1/100.

When observing the changes of the cut flowers, all of the carnations were kept large and beautiful for seven days, but differences were found among them based on the test liquids after nine days. The results are shown in Tables 1 and 2.

[Table 1]

| After 9 days | red carnation | | | | | white carnation | | | | |
|---|---|---|---|---|---|---|---|---|---|---|
| Cut flower No. | 1 | 2 | 3 | 4 | 5 | 1 | 2 | 3 | 4 | 5 |
| Test liquid 1 | ○ | ○ | ○ | ○ | ○ | ○ | ○ | ○ | ○ | ○ |
| Test liquid 2 | ○ | ○ | ○ | ○ | ○ | ○ | ○ | ○ | ○ | ○ |
| Test liquid 3 | ○ | ○ | ○ | ○ | ○ | ○ | ○ | ○ | ○ | ○ |
| Test liquid 4 | ○ | ○ | ○ | ○ | ○ | ○ | ○ | ○ | ○ | ○ |
| STS liquid | ○ | ○ | ○ | ○ | △ | ○ | ○ | ○ | ○ | ○ |

Where, the symbol ○ indicates a state of large and beautiful flower, and the symbol △ indicates a state of flower which has started to fade and wither.

[Table 2]

| After 10 days | red carnation | | | | | white carnation | | | | |
|---|---|---|---|---|---|---|---|---|---|---|
| Cut flower No. | 1 | 2 | 3 | 4 | 5 | 1 | 2 | 3 | 4 | 5 |
| Test liquid 1 | ○ | ○ | ○ | ○ | △ | ○ | ○ | ○ | ○ | ○ |
| Test liquid 2 | ○ | ○ | ○ | △ | △ | ○ | ○ | ○ | ○ | ○ |
| Test liquid 3 | ○ | ○ | ○ | ○ | ○ | ○ | ○ | ○ | ○ | ○ |
| Test liquid 4 | ○ | ○ | ○ | ○ | ○ | ○ | ○ | ○ | ○ | ○ |
| STS liquid | △ | △ | △ | △ | △ | ○ | ○ | ○ | ○ | ○ |

From those results, it can be understood that all of the test liquids are effective substantially for every kind of carnation. Especially for the white carnations, they are effective equally to the comparative STS liquid while they are more effective than the comparative STS liquid for the red carnations.

Embodiment 40

Three bloomed red roses were put in city water and in the following liquids respectively and left therein at a substantially constant room temperature of 27 to 29 °C. Then, their changes were observed.

The utilized liquids were as follows.

Test liquid 5: 1.9 g of deca-hydrate of sodium borate, 5.4 g of grape sugar and 0.21 g of an anticeptic of "SLAOFF 620" available from TAKEDA CHEMICAL INDUSTRIES, Ltd. as fungicidal composition were dissolved in 500 ml of city water.

Test liquid 6: 2.7 g of octa-hydrate of ammonium borate, 5.4 g of grape sugar and 0.21 g of "SLAOFF 620" were dissolved in 500 ml of city water.

Test liquid 7: 1.9 g of octa-hydrate of ammonium borate, 5.4 g of grape sugar and 0.21 g of "SLAOFF 620" were dissolved in 500 ml of city water.

When five days passed after those red roses had been placed in a thermostated room, all three red roses put in the city water changed black and withered. But, all three red roses put in the test liquid 5 and the test liquid 6 maintained their large, red and beautiful states. Two of the red roses put in the test liquid 7 maintained their large, red and beautiful states while only one of them changed black a little. From these results, it is clearly understood that an alkali metal salt of a boric acid or ammonium borate is remarkably effective also as a so-called posttreatment agent for a cut flower.

**Claims**

1.  An agent for retaining vitality of a cut flower, which agent containing at least one ingredient selected from an ingredient group comprising (1) an inorganic acid or its salt, (2) an organic acid having a carbon number of 2 to 4 or its salt, (3) a gallic acid, (4) nicotinamide and (5) L-aruginine.

2.  An agent for retaining vitality of a cut flower as set forth in claim 1, wherein said inorganic acid or its salt are a phospheric acid, an urea phospheric acid, ammonium phosphate, alkali metal salts of phosphoric acids, a phosphorous acid, alkali metal slats of perboric acids, aluminium potassium sulfate, aluminium sulfate or aluminium nitrate.

3.  An agent for retaining vitality of a cut flower as set forth in claim 1, wherein a salt of said inorganic acid is an alkali metal salt of a boric acid.

4.  An agent for retaining vitality of a cut flower as set forth in claim 1, wherein a salt of said inorganic acid is ammonium borate.

5.  An agent for retaining vitality of a cut flower as set forth in claim 1, comprising aluminium sulfate and a boric acid.

6.  An agent for retaining vitality of a cut flower as set forth in claim 3, 4 or 5, further containing succharides and anticeptics.

7.  An agent for retaining vitality of a cut flower as set forth in claim 1, wherein the salt of said organic acid having a carbon number of 2 to 4 is an alkali metal salt of an acetic acid.

8.  An agent for retaining vitality of a cut flower as set forth in claim 1, further containing a phosphoric acid as an effective ingredient.

9.  An agent for retaining vitality of a cut flower as set forth in claim 1, further containing ammonium phosphate as an effective ingredient.

10. An agent for retaining vitality of a cut flower as set forth in claim 1, further containing at least one selected from a boric acid and its salts as an effective ingredient.

11. A method for retaining vitality of a cut flower comprising a step for treating a cut portion of a cut flower by a solution containing at least one selected from an ingredient group comprising (1) an inorganic acid or its salt, (2) an organic acid having a carbon number of 2 to 4 or its salt, (3) a gallic acid, (4) nicotinamide and (5) L-aruginine.